(19) **Europäisches Patentamt**
**European Patent Office**
**Office européen des brevets**

(11) **EP 4 687 103 A1**

(12) **EUROPEAN PATENT APPLICATION**

(43) Date of publication:
**04.02.2026 Bulletin 2026/06**

(21) Application number: **24192192.3**

(22) Date of filing: **31.07.2024**

(51) International Patent Classification (IPC):
*G06T 11/00* (2026.01)

(52) Cooperative Patent Classification (CPC):
**G06T 11/005;** G06T 2211/412

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **UMC Utrecht Holding B.V.**
**3584 CS Utrecht (NL)**

(72) Inventors:
• **Beijst, Casper**
**3704 KV Zeist (NL)**
• **José Santo, Rodrigo**
**3582 JS Utrecht (NL)**
• **van den Berg, Nico**
**3514 XH Utrecht (NL)**
• **Sbrizzi, Alessandro**
**3511 EH Utrecht (NL)**

(74) Representative: **Eisenführ Speiser
Patentanwälte Rechtsanwälte PartGmbB
Postfach 10 60 78
28060 Bremen (DE)**

(54) **MOTION-CORRECTION OF IMAGES IN TRANSMISSION AND EMISSION TOMOGRAPHY**

(57) The invention relates to motion-corrected imaging of an object based on acquired projection data being tomographic projection data acquired for the object at a plurality of acquisition times during an acquisition period, and a motion estimate being indicative of a motion of the object in the acquisition period. The motion estimate is determined, based on the acquired projection data, a reference image of the object and a motion model indicating a plurality of candidate motions of the object during the acquisition period, by associating the reference image, for each of the plurality of candidate motions, with modelled projection data being modelled for the acquisition period assuming a respective candidate motion. A motion-corrected image of the object can then be reconstructed based on the acquired projection data and the motion estimate. In this way, an accurate imaging of moving objects can be achieved.

FIG. 2

EP 4 687 103 A1

**Description**

FIELD OF THE INVENTION

The invention relates to a system, a method and a computer program for motion-corrected imaging of an object.

BACKGROUND OF THE INVENTION

In projection-based tomographic imaging such as computed tomography (CT) or positron emission tomography (PET), images of an object are reconstructed from projection data acquired over finite acquisition periods. Motions of the object during acquisition of the projection data can therefore lead to a degradation in image quality. This problem increases with increasing acquisition periods and therefore particularly persists in techniques like PET, where typically relatively low doses of a radioactive tracer inside the body are used for imaging. There exist motion correction approaches by which the image quality can be maintained to some degree for specific kinds of motion. However, the accuracy with which objects carrying out general motions can be imaged is still significantly limited.

SUMMARY OF THE INVENTION

It is an object of the invention to allow for a more accurate imaging of a moving object.

In an aspect of the invention, a system for motion-corrected imaging of an object is provided, wherein the system comprises i) a projection data providing unit configured to provide acquired projection data, the acquired projection data being tomographic projection data acquired for the object at a plurality of acquisition times during an acquisition period, and ii) a motion estimation unit configured to determine a motion estimate, the motion estimate being indicative of a motion of the object in the acquisition period, wherein the motion estimate is determined, based on the acquired projection data, a reference image of the object and a motion model indicating a plurality of candidate motions of the object during the acquisition period, by associating the reference image, for each of the plurality of candidate motions, with modelled projection data, wherein the modelled projection data for a respective candidate motion are tomographic projection data that are modelled for the acquisition period assuming the respective candidate motion. Furthermore, the system comprises iii) an image reconstruction unit configured to reconstruct a motion-corrected image of the object based on the acquired projection data and the motion estimate.

Hence, tomographic projection data that have been acquired for the object at a plurality of acquisition times, and a reference image of the object, are used as a basis for an estimate of the object's motion, i.e., for estimating how the object moved during an acquisition period in which the projection data were acquired. The motion estimate is further made based on a motion model indicating a plurality of candidate motions of the object during the acquisition period, wherein the reference image is associated, for each of the plurality of candidate motions, with modelled projection data, the modelled projection data for a respective candidate motion being tomographic projection data that are modelled for the acquisition period assuming the respective candidate motion. In this way, a more accurate motion estimate can be achieved that is not limited to particular motion types. Since this accurate motion estimate is used for motion correction, i.e., for reconstructing a motion-corrected image from the acquired projection data, also the motion-corrected image can have an increased accuracy. Thus, the invention allows for a high-quality imaging of moving objects using projection-based tomographic imaging techniques. The increase in image quality may particularly be advantageous for transmission and emission tomography imaging techniques such as computed tomography (CT), positron emission tomography (PET) and variations thereof, including, for instance, cone beam computed tomography (CBCT) and single photon emission computed tomography (SPECT).

The acquired projection data can also be referred to as non-image, or raw, projection data. That the acquired projection data are referred to as being "tomographic" is not to be misunderstood such that any image reconstructed based on the projection data needs to be reconstructed in slices, or needs to be a slice image. In fact, any tomographic projection data referred to herein could equivalently be referred to just as projection data. Projection data are understood herein as arising from projections. In case of the acquired projection data, the projections are preferably real, physical projections. In case of the modelled projection data, the projections are preferably computed, virtual projections. Data as acquired in magnetic resonance imaging, which may be referred to as non-image MR data and may refer to k-space, are not understood as projection data herein.

That the acquired projection data are or have been acquired "for" the object shall be understood such that they preferably resulted at least partially from real, physical projections through the object. The acquired projection data could therefore also be regarded as acquired projection data of the object. Moreover, that the acquired projection data are or have been acquired at a plurality of acquisition times shall be understood such that they are or have been acquired at least partially at different times during the acquisition period. For instance, the acquired projection data may have been acquired at acquisition times that are uniformly distributed across at least a part of the acquisition period. In particular, in a PET acquisition, projection data may be continuously acquired by continuously measuring detection signals at a detector surrounding the object. Similarly, in a CT acquisition, a gantry may be rotated uniformly around the object while continuously measuring detection signal during an acquisition period.

Acquired projection data from one or more imaging modalities may be provided. If the acquired projection data refer to more than one imaging modality, a motion-corrected image may be reconstructed for each imaging modality. Thus, for instance, CBCT and SPECT projection data may be acquired simultaneously, wherein a motion-corrected CBCT image and a motion-corrected SPECT image may be reconstructed. Generally, acquired projection data from different imaging modalities may be provided for the same object, wherein the projection data may have been acquired in the same acquisition period, particularly simultaneously, or not. They may thus also have been acquired in different acquisition periods, such as in separate imaging procedures.

The image that serves as a basis for the motion estimate is referred to as a reference image, since it may be viewed as a reference for estimating the motion of the object. It may be reconstructed by known image reconstruction methods. Moreover, it may be reconstructed based on the acquired projection data. In particular, the reconstruction unit may be configured to reconstruct the reference image based on the acquired projection data, i.e., the projection data acquired in the acquisition period for which a motion estimate is to be determined. However, it is also possible that the reference image is obtained differently. In particular, the reference image may be, or may have been, reconstructed from previously acquired projection data, i.e., from data not acquired in the acquisition period for which a motion estimate is to be determined. For instance, the reference image may be a retrieved image of the object from a previous imaging procedure, or may be reconstructed from retrieved projection data from such a previous imaging procedure.

Accordingly, the system may comprise a reference image providing unit configured to provide the reference image, wherein the reference image providing unit may not be the image reconstruction unit. The reference image may be provided by receiving it from another unit, or by retrieving it from a storage. Moreover, the reference image may be determined by the reference image providing unit, and thereafter provided for further processing. For instance, the reference image provided by the reference image providing unit may be reconstructed based on the previous projection data.

The system may comprise a motion model providing unit configured to provide the motion model. Providing the motion model preferably corresponds to defining the plurality of candidate motions, such as by parametrizing a plurality of possible motions of the object in terms of a mathematical relation.

It is preferred that the image reconstruction unit and the motion estimation unit are configured to carry out an iteration including several iteration cycles in each of which the reference image is updated based on a respective previously reconstructed motion-corrected image. Thus, the image reconstruction unit and the motion estimation unit may be alternating several times between a) determining a respective motion estimate based on a respective previously obtained image and b) reconstructing a respective motion-corrected image based on a respective previously determined motion estimate.

It shall be understood that, for carrying out the iteration, the image being associated by the motion projection model with respective modelled projection data is preferentially the image that has previously been obtained, such as the one that has previously been reconstructed by the image reconstruction unit. That is to say, for a first motion estimate determined by the motion estimation unit, the motion projection model may receive as input an initial reference image, which may or may not have been reconstructed by the image reconstruction unit, whereas for a subsequent second motion estimate determined by the motion estimation unit, the motion estimation unit may use and/or receive as input the motion-corrected image reconstructed based on the first motion estimate, *et cetera.*

While an iteration as indicated above may be preferred, this may not always be necessary to achieve a sufficient image quality. In particular, already the first motion-corrected image may be accurate enough. Hence, generally, at least two images are obtained, i.e., at least one motion-corrected image. As long as only one motion-corrected image is reconstructed, the reference image may also be regarded as an initial image or initial reference image, and the motion-corrected image may be viewed as a motion-corrected version of the initial image. The reconstruction of the motion-corrected image may then just differ from the reference image in that it also takes into account an estimated motion of the object. Image reconstruction methods of this kind are known as well, such that also the motion-corrected image may be reconstructed in a known manner. In fact, the reference image and the motion-corrected image may also be reconstructed using the same motion-correcting reconstruction method, in which case the reconstruction may just differ in the motion estimate used for the reconstruction. While, for reconstructing the motion-corrected image the motion estimate determined by the motion estimation unit is used, for reconstructing the initial reference image a zero motion estimate may be taken as a basis, or an estimate based on prior information.

Hence, for further increasing an image quality, it may be preferred that more than two images are being obtained, i.e., more than one motion-corrected image is reconstructed after having obtained the initial reference image. It is then preferred that image reconstruction and motion estimation are carried out alternatingly, in order to successively increase an accuracy of the motion estimate and hence of the reconstructed image. The reference image may then be repeatedly updated based on a respective previous motion estimate. Thus, while the initial image, i.e., the initial reference image, may not have been corrected for any motion of the object or only for a zero estimate of the motion of the object, subsequent versions of the reference image are preferably reconstructed in consideration of a more accurate motion estimate determined by use of the motion model.

Expressed yet differently, the motion determination unit and the image reconstruction unit are preferably configured to determine the motion of the object and reconstruct the motion-corrected image of the object in cooperation by carrying out an iteration. The iteration may include several iterations cycles, wherein each iteration cycle may include a) determining a respective motion estimate and b) reconstructing a respective motion-corrected image, wherein, for determining the respective motion estimate and/or motion-corrected image, a result of a respective previous comparison of the modelled projection data to the acquired projection data is preferably used.

If projection data from more than one imaging modality have been acquired, the iteration can be carried out such that motion-corrected images for the respective modalities are reconstructed alternatingly. In particular, for reconstructing a motion-corrected image based on acquired projection data from a second imaging modality, a motion estimate may be used that was previously determined based on the acquired projection data from a first imaging modality different from the second imaging modality. The first and the second imaging modality may refer, for instance, to CBCT and SPECT, respectively, and the projection data may be acquired in the same acquisition period or in different acquisition periods.

Instead of alternating between reconstructions for the different modalities, it may also be preferred to use the acquired projection data from the different modalities in combination for determining a motion estimate, wherein respective different motion-corrected images corresponding to the different imaging modalities may then be reconstructed using this motion estimate.

Notably, that a respective image being reconstructed by the image reconstruction unit based on a respective motion estimate is referred to as "motion-corrected" image shall not be understood as requiring any particular quality of the image. Instead, the term "motion-corrected" shall just emphasize that the image is reconstructed based on a motion estimate. In particular, if the reference image is reconstructed based on the acquired projection data based on which also the motion-corrected image is reconstructed, the motion-corrected image may be referred to as an image that is reconstructed for correcting the reference image for a motion of the object.

The motion estimation unit is preferably configured to determine the motion estimate by comparing the acquired projection data to modelled projection data for at least a part of the plurality of candidate motions of the object. In the above indicated case that the acquired projection data refer to multiple imaging modalities and a motion estimate is determined based on the acquired projection data from the multiple imaging modalities in combination, the comparison may involve a comparison to modelled projection data for the multiple imaging modalities. The comparison may involve determining a deviation, which may particularly be a function of comparison such as a difference, between the acquired projection data and the modelled projection data. The comparison between the modelled projection data and the acquired projection data may involve a full projection space. This can make the motion estimate very accurate. However, the comparison between the modelled projection data and the acquired projection data may just as well be limited to parts of projection space. In particular, the modelled projection data may not relate to all acquisition times, such that the comparison may be limited to predefined reference times for which modelled projection have been determined. The motion estimation unit is preferably configured to determine the motion estimate by directly using the acquired projection data, without an intermediate image reconstruction. This allows for fast and yet very accurate motion estimates, thereby facilitating accurate tracking of even fast object motions.

The motion model preferentially associates the reference image, for each of the plurality of candidate motions, with a motion-transformed version of the reference image for each of a plurality of reference times, thereby indicating a time sequence of motion-transformed versions of the reference image for each of the plurality of candidate motions. Moreover, the modelled projection data for a respective candidate motion preferably refer to a time sequence of modelled projections of the motion-transformed versions of the reference image for the respective candidate motion.

The motion model may be part of a motion projection model used by the motion estimation unit for associating the reference image to the modelled projection data for a respective candidate motion, wherein the motion projection model is preferably further based on a projection model, wherein the projection model associates the time sequence of motion-transformed versions of the reference image for a respective candidate motion with the modelled projection data for the respective candidate motion.

Splitting the motion projection model into a motion model and a projection model can reduce the complexity of the motion projection model without restricting it to a limited set of motions. Moreover, the projection model can be a known projection model.

For PET imaging, it may be preferred that the projection model considers scatters and randoms, although this is not necessary. For CT imaging, photon scattering may also be included in the projection model, but it has been observed that this is not necessary for achieving a sufficient image quality. Other CT projection corrections that may preferentially be included, but which are not necessary, would refer, for instance, to a dark current offset, gain, filter, bad pixel map, ghosting and/or a flex map. Thus, for associating a motion-transformed version of the reference image with corresponding modelled projection data, the motion estimation unit generally may or may not be configured to take into account corrections like the aforementioned ones.

In particular, the motion model can be defined such that it can capture both periodic motions (e.g., respiratory and/or cardiac motions) and non-periodic or random motions (e.g., repositioning, peristalsis) of the object. The modelled motions can particularly be non-rigid motions. Preferably, the motion estimate is determined by favoring smooth object motions.

The candidate motions are preferably indicative of possible motions of the object during the acquisition period. The system may comprise a candidate motions providing unit configured to provide the candidate motions. For instance, the candidate motions may be provided based on the motion model. That is to say, the candidate motions may be provided, for instance, in terms of model parameters of the motion model. The motion model may be a motion field model, i.e., a model indicating a respective motion of the object in terms of a motion field.

The time sequence of motion-transformed version of the reference image for a given candidate motion can have a temporal resolution as high as, for instance, 1/(182 ms) for CT or 1/(500 ms) for PET. That is to say, a motion-transformed version of the reference image may be indicated by the motion model for timeframes having a length of just 182 ms or 500 ms, for instance. This also means that eventually a motion-corrected image may be obtained for every such timeframe. For a CT acquisition period of, for instance, 30 s, a frame rate of 1/(182 ms) would thus result in at least 160 motion-corrected images, by which the motion of the object during the acquisition period can be accurately tracked. Each frame may correspond to one reference time.

It is also preferred that the motion estimation unit is configured to determine the motion estimate based further on a degree of regularity of the candidate motions of the object. In this way, reasonable, or realistic, candidate motions can be favored. Hence, overall less candidate motions may need to be considered and less corresponding modelled projection data may need to be compared to the acquired projection data.

A degree of regularity of a candidate motion may be measured by a predefined regularity measure. Regularity, as understood herein, may particularly refer to smoothness, but is not limited thereto. If, for instance, the candidate motions are represented as motion fields, wherein a motion field may indicate a motion direction for a respective image point by a vector, a regularity measure indicating particularly a degree of smoothness may be indicative of how fast the lengths of the vectors indicated by the respective motion field change in space and/or in time. More generally, a regularity measure, and specifically a smoothness measure, may be chosen such that it indicates a degree of variation of the candidate motion in space and/or in time. For this purpose, the regularity measure may involve a Laplacian or a total variation, for instance. If discontinuities in the candidate motions shall be allowed, such as to allow different object regions (e.g., organs) to move with different levels of smoothness, regularity may also be measured taking into account prior anatomical information.

Thus, the regularity measure may be based on anatomical information. For example, if it is known that certain object regions, such as certain organs of a body, do not get deformed, the regularity measure may involve a Jacobian. In this way, incompressibility constraints can be imposed on the candidate motions. Moreover, the regularity measure may include an edge preserving penalty. In this way, contrasting values between different object regions (e.g., organs) may be enforced. In other words, those candidate motions may be favored in determining the motion estimate that maintain contrasting values between predefined object regions, such as at edges.

While determining the motion estimate based further on a degree of regularity of the candidate motions of the object can allow for particularly good control over the regularity, and particularly the smoothness, of the candidate motions and thus ultimately also the motion estimate, in principle already the motion model itself may be chosen to ensure a certain degree of regularity. For instance, a motion model may be selected in which all candidate motions will have a predefined degree of regularity, particularly smoothness.

The motion estimation unit is preferentially configured to determine the motion estimate by parametrizing the candidate motions by a set **c** of motion parameters and determining for which c a function of the form

$$L = \varepsilon \mathcal{L}(\mathbf{F}(\mathbf{c}), \mathbf{s}) + \lambda \mathcal{R} \qquad (1)$$

is minimized, wherein L measures a similarity between modelled projection data indicated by **F(c)** and acquired projection data indicated by $\mathbf{s}$, $\varepsilon$ is a predefined coefficient, which may indicate a data consistency, $\mathcal{R}$ is a regularizing function for regulating the candidate motions of the object being considered for minimizing $L$, and $\lambda$ is a regularization coefficient. **F(c)** may refer to a motion projection model mapping a respective reference image, for a candidate motion indicated by **c**, to modelled projection data. The similarity measure $\mathcal{L}$ may refer to an L2 norm, for instance, but is not limited thereto.

In a preferred embodiment, the acquired projection data are computed tomography (CT) projection data and the motion estimation unit is configured to determine the motion estimate by parametrizing the candidate motions by a set c of motion parameters and determining for which c a function of the form

$$L_{\text{CT}} = \frac{1}{T}\sum_{t=1}^{T}\|\mathbf{F}_t(\mathbf{c}\mid\mathbf{q}_0) - s_t\|_2^2 + \lambda\mathcal{R}(\mathbf{T}_t(\mathbf{c})) \tag{2}$$

is minimized, wherein $\mathbf{q}_0$ indicates the reference image, $s_t$ indicates the acquired projection data at time $t$, with $t = 1, ..., T$, $\mathbf{F}_t(\mathbf{c}\mid\mathbf{q}_0)$ indicates the modelled projection data in terms of the motion model, $\mathbf{T}_t(\mathbf{c})$ indicates the candidate motion of the object at time $t$, $\mathcal{R}(\mathbf{T}_t(\mathbf{c}))$ is a regularizing function for regulating the candidate motions of the object considered for minimizing $L_{\text{CT}}$ (for instance, for promoting smooth motion estimates, particularly motion fields), and $\lambda$ is a regularization coefficient. The times t may be the reference times indicated above. The times t may also be regarded as particular acquisition times. For CT imaging, each time t may correspond to a corresponding projection, or gantry angle. Thus, a projection indicated by $\mathbf{F}_t(\mathbf{c}\mid\mathbf{q}_0)$ may be understood as a projection in a direction corresponding to a gantry angle at time t.

In another preferred embodiment, the acquired projection data are positron emission tomography projection (PET) data and the motion estimation unit is configured to determine the motion of the object by parametrizing the candidate motions by a set c of motion parameters and determining for which $\mathbf{c}$ a function of the form

$$L_{\text{PET}} = \sum_{t=1}^{T}\sum_{b=1}^{B}\mathbf{F}_{b,t}(\mathbf{c}\mid\mathbf{q}_0, \boldsymbol{\mu}) - \log\bigl(\mathbf{F}_{b,t}(\mathbf{c}\mid\mathbf{q}_0, \boldsymbol{\mu})\bigr)s_{b,t} + \lambda\mathcal{R}(\mathbf{T}_t(\mathbf{c})) \tag{3}$$

is minimized, wherein $\mathbf{q}_0$ indicates the reference image, $\boldsymbol{\mu}$ indicates an attenuation map, $s_{b,t}$ indicates the projection data acquired for a line of response indicated by $b$ at time $t$, with $b = 1, ..., B$ and $t = 1, ..., T$, $\mathbf{F}_{b,t}(\mathbf{c}\mid\mathbf{q}_0, \boldsymbol{\mu})$ indicates the modelled projection data, $\mathbf{T}_t(\mathbf{c})$ indicates the candidate motion of the object at time t, $\mathcal{R}(\mathbf{T}_t(\mathbf{c}))$ is a regularizing function for regulating the candidate motions of the object considered for minimizing $L_{\text{PET}}$ and $\lambda$ is a regularization coefficient. Again, the times $t$ may be reference times and/or acquisition times. Moreover, as before, the regularizing function may be selected such that smooth motion estimates are promoted.

The attenuation map $\boldsymbol{\mu}$ may be obtained based on a CT image of the object, wherein the CT image may show the object at $t = 1$. It may be obtained from an initial CT image of the object, which may have been captured before PET acquisition has been initiated, by registration to the reference image $\mathbf{q}_0$. The attenuation map is preferentially also transformed by the candidate motions indicated by the motion model. Thus, for each motion-transformed version of the reference image, a corresponding motion-transformed version of the attenuation map may be determined. The motion-transformed versions of the attenuation map are preferentially used for determining the modelled projection data, such as based on the projection model.

The functions given in above equations (1) to (3) may also be referred to as objective functions. Thus, the motion estimation unit may be configured to determine the motion estimate based on an objective function depending on the acquired projection data and the modelled projection data. In fact, in embodiments where several motion-corrected images are reconstructed iteratively, it may be preferred that the objective function changes over iterations. In particular, a different objective function may be used in each iteration for reconstructing a respective motion-corrected image. For instance, in embodiments where, as indicated further above, the acquired projection data include acquired projection data from two imaging modalities, in odd iterations a motion-corrected image may be determined for a first of the two imaging modalities, and in even iterations a motion-corrected image may be determined for the second of the two imaging modalities.

The motion model is preferably based on a set of functions. This can reduce the amount of parameters required for the motion model. Possible functions are, for example, sets of basis functions such as cubic B-splines, wavelets, neural networks or Fourier series. Using neural networks as basis functions of the motion shall not be misunderstood such that the manner described herein for determining a motion estimate should in that case be replaced by a conventional training of the neural network. Instead, a neural network, used as a basis function for the motion model, shall just refer to the parametrized function describing the neuronal network, i.e., the neural network function. The parameters of the neuronal network function would still be determined by the motion estimation unit like the parameters of any other kind of motion model. Neural network function are considered to allow for accurate motion estimates without too many parameters. For instance, the corresponding neural network may be relatively shallow, i.e., as opposed to deep.

In fact, it may be preferable that the motion model is based on B-splines, such as cubic B-splines, for instance. In particular, the motion model may parametrize object motions by a motion field of the form

$$T_t(c)[r] = r + \begin{pmatrix} b^x(r) \cdot c_t^x \\ b^y(r) \cdot c_t^y \\ b^z(r) \cdot c_t^z \end{pmatrix} , \qquad (4)$$

where $r$ indicates any point in space, $b^{x,y,z}(r)$ are cubic B-splines and $c_t^{x,y,z}$ are spatially independent motion coefficients, which vary from timeframe to timeframe. Uniformly spaced control points may be used to determine the B-splines and the further parameters, whereafter the motion model may be evaluated for every point $r$ in image space to transform a respective image according to above equation (4). By splitting motion parameters into spatial parts like $b^{x,y,z}(r)$ and temporal parts like $c_t^{x,y,z}$, a spatiotemporal correlation of the object motion can be exploited. For instance, a cubic B-spline as disclosed in section II.B, particularly equation (3), of the article "Nonrigid Registration Using Free-Form Deformations: Application to Breast MR Images" by D. Rueckert et al., IEEE Transactions on Medical Imaging, volume 18, number 8 (1999) may be used, wherein this article is herewith incorporated by reference in its entirety. In above equation (4), "." is the vector scalar product and could therefore also be regarded as denoting matrix multiplication, wherein the row vector $b^x(r) \in \mathbb{R}^{1 \times N_c}$ is multiplied by the column vector $c_t^x(r) \in \mathbb{R}^{N_c \times 1}$, with $N_c$ the number of motion coefficients/control points.

The regularization may particularly be achieved using

$$\mathcal{R}(T_t(c)) = \sum_{p \in \{x,y,z\}} \int_\Omega \left| \Delta T_t^p(r) \right|^2 dr , \qquad (5)$$

wherein $\Omega$ may correspond to an entire image region. However, this is not the only option. For instance, the Laplacian $\Delta$ in above equation (5) could be replaced by a total variation. In fact, as mentioned above, it has been found to be generally beneficial to determine the motion estimate such that smooth motion estimates are favored. For instance, smooth motions may be considered as candidate motions with a higher likelihood than non-smooth motions.

Optionally, the projection data providing unit is configured to provide acquired projection data for a plurality of acquisition periods, wherein a motion-corrected reference image is reconstructed based on one or more motion estimates determined by the motion estimation unit for each acquisition period. Thus, a time sequence of motion-corrected images can be obtained by warping the motion-corrected reference image to the motion estimate of the corresponding acquisition period. This allows for a high-quality time-resolved imaging of an object, even if the object moves relatively fast. The acquisition periods can be overlapping or not.

The images referred to herein may be two-dimensional or three-dimensional images. Thus, the initial reference image and its one or more updates corresponding to the one or more motion-corrected images, as obtained for a given acquisition period, may be two-dimensional or three-dimensional.. However, since in two dimensions motions out of the respective image plane may not be as accurately captured, it is preferred that the images being referred to herein are three-dimensional. Thus, the acquired projection data are preferably sufficient for reconstructing a three-dimensional image of the object.

For PET, the acquired projection data may always, i.e., in any given time frame during the acquisition period, correspond to a full set of lines of response but they may only measure the amount of signal detected in that respective time frame. The signal may then not be enough for image reconstruction for each time frame, so the acquired projection data from an acquisition period spanning several time frames are usually added together (in the mathematical sense) to make up enough signal for the full acquisition.

Thus, for instance, in an application to PET imaging, the projection data from an acquisition period may be divided into a plurality of sets corresponding to respective acquisition sub-periods or time frames, with lines of response in all spatial directions measuring the signal for only the corresponding sub-period or time frame. Motion during the acquisition period is estimated by estimating a motion state, or image transformation, for each acquisition sub-period or time frame, and the three-dimensional motion-corrected image is reconstructed based on the plurality of motion states.

Similarly, in an application to CT imaging, the projection data providing unit may be configured to provide projection data from an acquisition period preferentially corresponding to a full three-dimensional scan of the object. In this case, the projection data acquired in a respective acquisition sub-period or time frame may just correspond to a limited range of acquisition angles or single acquisition angle. Again, i.e., otherwise as in PET, the projection data may be divided into a plurality of sets corresponding to respective acquisition sub-periods or time frames, wherein a motion during the acquisition period is estimated by estimating a motion state, or image transformation, for each acquisition sub-period or time frame, and the three-dimensional motion-corrected image is reconstructed based on the plurality of motion states.

A further aspect of the invention relates to a method for motion-corrected imaging of an object, the method including i) providing acquired projection data, the acquired projection data being tomographic projection data acquired for the object at a plurality of acquisition times during an acquisition period, and ii) determining a motion estimate, the motion estimate being indicative of a motion of the object in the acquisition period, wherein the motion estimate is determined, based on the acquired projection data, a reference image of the object and a motion model indicating a plurality of candidate motions of the object during the acquisition period, by associating the reference image, for each of the plurality of candidate motions of the object, with modelled projection data, wherein the modelled projection data for a respective candidate motion are tomographic projection data that are modelled for the acquisition period assuming the respective candidate motion. In a further step iii) of the method, a motion-corrected image of the object is reconstructed based on the acquired projection data and the motion estimate.

The invention also relates in an aspect to a computer program for motion-corrected imaging of an object, comprising instructions causing a computer to carry out the above method when the program is carried out on the computer.

It shall be understood that the system of claim 1, the method of claim 14 and the computer program according to claim 15 have similar and/or identical preferred embodiments as defined in the dependent claims.

It shall be understood that a preferred embodiment of the invention can also be any combination of the dependent claims with the respective independent claim.

These and other aspects of the invention will be apparent from and elucidated with reference to the embodiments described hereinafter.

In the following, the present disclosure is further described with reference to the enclosed figures. The same reference numbers in the drawings and this disclosure are intended to refer to the same or like elements, components, and/or parts.

BRIEF DESCRIPTION OF THE DRAWINGS

Fig. 1    shows schematically and exemplarily a method for motion-corrected imaging of an object,

Fig. 2    shows schematically and exemplarily a system for motion-corrected imaging of an object,

Fig. 3    illustrates motion estimation and corresponding image correction results achieved in for simulated, or in silico, CBCT imaging,

Fig. 4    illustrates motion estimation and corresponding image correction results achieved for real CBCT imaging,

Fig. 5    illustrates motion estimation and corresponding image correction results achieved in for simulated, or in silico, PET imaging, and

Fig. 6    illustrates motion estimation and corresponding image correction results achieved for real PET imaging.

DETAILED DESCRIPTION OF EMBODIMENTS

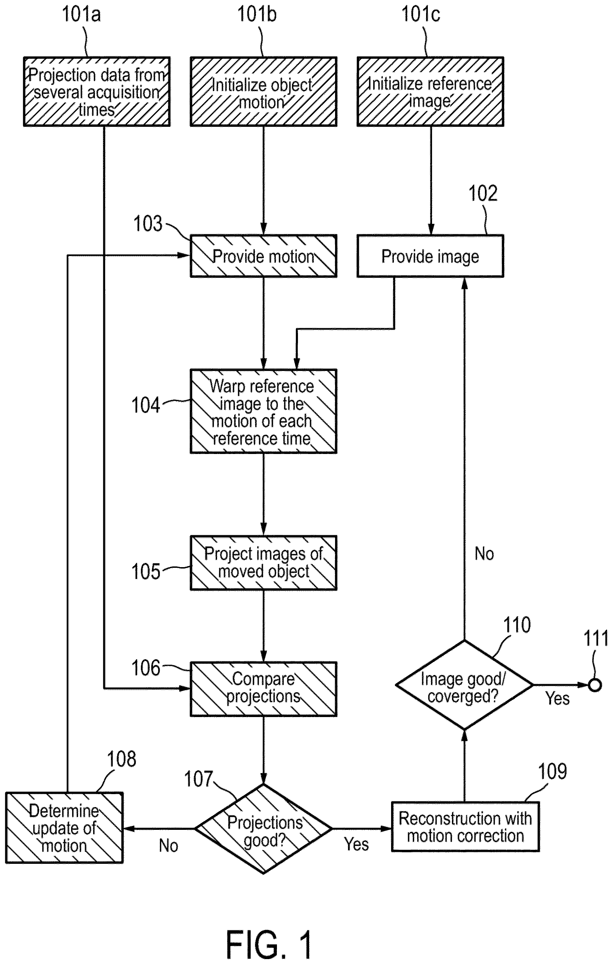

Fig. 1 is a flowchart illustrating an embodiment of a method for motion-corrected imaging of an object.

In a step 101a of the method, acquired projection data are provided, wherein the acquired projection data are tomographic projection data acquired for the object at a plurality of acquisition times during an acquisition period. The acquired projection data may also be referred to as measured projection data, and may be provided as raw list mode data, for instance. The acquisition period may thus also be viewed as a measurement period, wherein, at each of the acquisition times, a respective set of projection data has been acquired. None of the sets of projection data from the acquisition period needs to be complete enough to reconstruct a corresponding tomographic image. In particular, it is not necessary that an accurate tomographic image can be reconstructed from the acquired projection data for each of the plurality acquisition times. In fact, the acquisition period may rather be viewed as a time window in which, in terms of the acquired projection data from the plurality of acquisition times, additional information is collected about the object, i.e., information in addition to a possibly already existing image of the object. Since this additional information is collected over the plurality of acquisition times and hence an extended period of time, it can carry information about a motion of the object. The acquisition period can have a length of, for instance, 30 seconds. The acquired projection data form the acquisition period is preferentially sufficient for reconstructing based thereon a three-dimensional image of the object, but this image may be blurred due to a motion of the object. This motion may, in a step 101b of the method, initially estimated to be zero. That is to say, initially it may be assumed that the object did not move in the acquisition period. However, also other initial motion estimates are possible, which may be based on previous knowledge about a motion of the object, for instance.

In a step 101c of the method, an initial reference image of the object is provided, i.e., the reference image is initialized. The reference image may be obtained by reconstruction from the acquired projection data from step 101a. This will subsequently be assumed, although in principle also other ways of obtaining the reference image are possible. For instance, the reference image may be based on a previous acquisition, such as via retrieval from a database. The image obtained in step 101c can be considered to be a reference image for determining the motion of the object, i.e., more accurately than in step 101b. Moreover, the image provided in step 101c can be the image that is to be motion-corrected. The motion-corrected image may thus be based on the image provided in step 101c and the determined motion of the object. The motion-corrected image to be determined may also be referred to as a motion-corrected version of the image provided in step 101c.

The reference image provided in step 101c is preferably reconstructed from more projection data than acquired at each of the plurality of acquisition times. Moreover, at least part of the projection data used to reconstruct the reference image is preferably acquired at a time or over a time period close, overlapping with or identical to the acquisition period in which the projection data in step 101 are acquired. In particular, the reference image can be reconstructed based on a combination of the plurality of sets of projection data acquired at the respective acquisition times in the acquisition period.

For instance, the reference image can be a time-averaged image, i.e., an image corresponding to an average of images that are or would be reconstructed for each of the acquisition times. This may particularly be the case if the reference image is an initial image for whose reconstruction not yet any non-zero motion estimate has been used, or not yet any motion estimate that was considered to be accurate. The reference image may thus, particularly at an initial stage, be blurred due to a motion of the object during the acquisition period. In other words, the reference image may particularly not resolve temporal changes of the object, and hence may be referred to as a static image, particularly at an initial stage where not yet any accurate motion estimate has been used to arrive at the reference image. Subsequently described steps 102 to 111 of the method illustrated by Fig. 1 allow to correct, or further correct, the reference image for a motion of the object, i.e., to deburr or further deburr the reference image.

In step 102, a reference image is provided. Initially, the reference image provided in step 102 may be the initialized reference image from step 101c, whereas in subsequent repetitions of step 102, as described further below, the reference image may be a previously obtained motion-corrected image.

In step 103, a motion estimate is provided. The motion estimate is indicative of a motion of the object in the acquisition period. Initially, the motion estimate may be the motion initial motion estimate from step 101b, such that the motion estimate may also be viewed as an assumed motion of the object, since there may not yet be any information available based on which more than an assumption could be made regarding the motion of the object. In fact, as mentioned above the motion estimate may initially be zero or an estimation based on prior information. Subsequently, as will be explained further below, the motion estimate provided in step 103 may be successively updated, preferably improved, based on corrected versions of the reference image.

The motion of the object is described in terms of a predefined motion model, i.e., a model that parametrizes possible motions of the object. More generally, the motion model may parameterize image changes indicative of a motion of the object. Hence, a motion model may in principle be rather complex and involve many parameters. The number of parameters of the model may be, for instance, approximately 10 times an image dimension. In order to describe the motion of the object more efficiently and thereby allow for a fast motion correction, a motion model with a relatively low number of parameters is preferred. In this embodiment, the motion model may be based on B-splines, supplemented by a set of spatially independent parameters by which a respective B-spline at a given point in time can be transformed. The supplementing set of spatially independent parameters may comprise, for instance, three parameters for each point in time for which the motion is to be modelled, wherein the three parameters correspond to one parameter for each spatial dimension. In principle, however, the motion model may also be a fully four-dimensional motion model, i.e., a model capturing any possible motion dependence on three-dimensional space and on time. On the other hand, the motion model, when understood as parametrized definition of how object or image points at any first point in time map to object or image points at any second point time, may also just be a three-dimensional motion model, i.e., it may model the motion of the object in all three spatial dimensions, without a change of the model, particularly the model parameters, in time. Such a model may model uniform static motion. However, this may generally not be enough.

In fact, for a motion-correction of PET images, it may be preferred that the motion model is a three-dimensional motion model that is different for every timeframe. In this way, also non-uniform or dynamic motions may be modelled. For a motion-correction of cone beam CT (CBCT) images, either a fully four-dimensional motion model may be used, or particularly a four-dimensional motion model in which, for capturing a time dependence of the model, a temporal spline independent of the three spatial dimensions is used.

Where the motion model is based on B-splines, its parameters may be defined by a plurality of control points. Control points provide a convenient way to compute and represent a B-spline. Control points could thus be said to determine the shape of a B-spline curve. The curve is drawn such that it is influenced by the positions of the control points, although it does not necessarily pass through them. Known recursive algorithms can be followed to generate, using corresponding control points, basis functions of a B-spline and ultimately the curve of the B-spline itself. It may be preferred that the control points are positioned uniformly. In other words, the control points may be distributed uniformly across an image space associated with the reference image.

Based on an initial motion estimate provided in step 103, the reference image is, in step 104, transformed into a motion-transformed image for each of a plurality of reference times. The reference times may be identical to, or form a subset of, the acquisition times, for instance. The motion-transformed images at a respective acquisition time could be understood as an estimate (initially, a guess or expectation) of an image of the object at the respective acquisition time based on the assumption that the object has moved or moves as estimated in step 103. The motion-transformed images may also be referred to as "warped" images, particularly if the motion model allows for non-rigid transformations.

In step 105, the motion-transformed images determined in step 104 are each projected to determine corresponding projection data. Since the motion-transformed images are based on the motion model, the projection data determined from the motion-transformed images can be referred to as modelled projection data. For determining a set of modelled projection data for a given motion-transformed image, a projection model is used, wherein the motion model and the projection model may be regarded as jointly forming a motion projection model. The projection model may be a known projection model. For instance, the open-source framework *parallelproj* may be used to carry out the projections. This framework, which is realized as a public Python library, is described, for instance, in the article "PAR-ALLELPROJ-an open-source framework for fast calculation of projections in tomography" by G. Schramm et al., Frontiers in Nuclear Medicine, volume 3 (2023), which is herewith incorporated in its entirety by reference.

In step 106, the projection data corresponding to the motion-transformed images, i.e., the modelled projection data, are compared to the acquired projection data provided in step 101a. Moreover, a complexity of the estimated motion leading to the motion-transformed images may be evaluated. The complexity of the estimated motion may refer to a degree of spatial and/or temporal homogeneity or smoothness of the motion, such as of a motion field describing the motion. For instance, an evaluation function may be evaluated in a step 107, wherein the evaluation function depends on a) a relation between the modelled projection data and the acquired projection data, and b) the estimated motion, particularly a complexity of the estimated motion. The evaluation function may be understood as a combined measure of a) a similarity between the modelled projection data and the acquired projection data and b) of the estimated motion, particularly its complexity. As long as the value of the evaluation function indicates that the similarity between the modelled projection data and the acquired projection data is not yet sufficient and/or the complexity of the estimated motion can be reduced, particularly that the similarity between the modelled projection data and the acquired projection data can be substantially increased without making the estimated motion too complex, the method continues with step 108.

In step 108, the estimated motion and the acquired projection data are used to determine a new estimate for the motion of the object. In other words, a previous motion estimate may be updated in step 108. The new motion estimate is made based on the acquired projection data and the current estimate for the motion of the object. A reconstruction of new motion-transformed images from projection data is thus not needed. Instead, a new motion-transformed image for each of the acquisition times can be determined based on the reference image and the new motion estimate. Preferably, the new motion estimate is determined further depending on a value of the evaluation function determined in step 107. The new motion-transformed images may inherit this dependence on the evaluation function by their dependence on the new motion estimate.

Given a reference image, motion-transformed images and an assumed or estimated motion can be said to correspond to each other. If either of the two is known, the other can be determined on that basis. Therefore, in principle, it is sufficient to use the acquired projection data and the current motion estimate to determine either of the two, wherein the other may then be concluded without further reference to the acquired projection data or the current motion estimate. However, image reconstruction is computationally more intensive than transforming an image based on an estimated motion. Hence, by determining the new motion-transformed images based on the reference image and the new motion estimates, wherein the new motion estimates are determined without image reconstruction, is computationally efficient.

Step 108 in fact closes a first iteration cycle of the illustrated method, wherein this iteration cycle relates to the motion estimation. The closure of the first iteration cycle can be understood such that the new motion estimate determined in step 108 is subsequently provided as motion estimate in step 103, and the new motion-transformed images determined based on the new motion estimate correspond to the above-mentioned motion-transformed images determined in step 104. Then, the method continues again with step 105, wherein now the new motion-transformed images are used as a basis for the projections. In other words, the modelled projection data being determined in this repetition of step 105 for the respective reference times are determined based on the corresponding new motion-transformed images.

The iteration of steps 103-108, which may also be referred to as an optimization since its aim is to determine an optimal motion estimate for a given reference image, may be carried out using the NAdam optimizer, for instance, as known from the article "Incorporating Nesterov momentum into Adam" by T. Dozat, Proc. ICLR, pages 1-4 (2016), which is herewith incorporated by reference in its entirety.

Thus, steps 103 to 108 are being repeated cyclically as long as, in a respective repetition of step 107, a predefined abort criterion is fulfilled. In particular, the abort criterion may be that the respective value of the evaluation function is acceptable, i.e., for instance, satisfies, or no longer satisfies, a predefined inequality. The abort criterion may be predefined such that, if it is fulfilled, this indicates that the respective modelled projection data are sufficiently similar to the acquired projection data and the estimated motion is realistic. Once the abort criterion is fulfilled, the method continues with step 109.

In step 109, a motion-corrected image of the object is reconstructed. The motion-corrected image may be determined based on a previous or last motion estimate, i.e., a previous or last estimate of the motion of the object, and on the acquired projection data, i.e., the projection data that may have been used to reconstruct the reference image. Known techniques for motion-corrected image reconstruction may be used for this purpose.

For instance, a simultaneous iterative reconstruction technique (SIRT) with motion correction based on the ASTRA toolbox may be used. The ASTRA toolbox is described, for instance, in the article "The ASTRA Toolbox: A platform for advanced algorithm development in electron tomography" by W. van Aarle et al., Ultramicroscopy, volume 157, pages 35 to 47 (2015), which is therewith incorporated in its entirety by reference. Another choice would be using the framework CASToR (Customizable and Advanced Software for Tomographic Reconstruction), as described in the article "CASToR: a generic data organization and processing code framework for multi-modal and multi-dimensional tomographic reconstruction" by T. Merlin et al., Phys Med Biol. volume 63, number 18 (2018), which is herewith also incorporated by reference in its entirety. In case of PET and SPECT, particularly OSEM algorithms may be used, although other algorithms like MLEM or MAP are possible as well. In case of CT, particularly SIRT may be used, while it would however also be possible to use filtered back-projection (FBP), for instance.

Motion correction may in each case be added to a respective known general reconstruction scheme. In this regard, exemplary reference is made to a method for motion-corrected reconstructions as described in the article "Theoretical and Numerical Study of MLEM and OSEM Reconstruction Algorithms for Motion Correction in Emission Tomography" by J. Dey et al., IEEE Trans Nucl Sci., volume 56, issue 5, pages 2739 to 2749 (2009), which is herewith incorporated by reference in its entirety. Similarly, exemplary reference is made to a method for motion-corrected reconstructions as described in the conference paper "Combined Motion Estimation and Reconstruction in Tomography" by G. Van Eyndhoven et al., Computer Vision - ECCV 2012; Workshops and Demonstrations, Lecture Notes in Computer Science, volume 7583, pages 12 to 21, which is herewith incorporated by reference in its entirety.

Any of these techniques may already have been used for reconstructing the reference image in step 102 from the acquired projection data, although in that case without yet making use of a motion estimate as following from the first iteration cycle 103-108, but instead just being based, for instance, on a blank or zero motion of the object. While not indicated in Fig. 1, the reconstruction carried out in step 109, like the reconstruction of the initial reference image, may itself involve further iterations.

In a subsequent step 110, a further abort criterion may be evaluated in order to decide whether the method should be terminated and, for instance, a final output 111 should be provided, or whether the method should continue to further improve an image quality. In contrast to the previous abort criterion evaluated in step 107, the further abort criterion may be related to the image reconstructed in step 109, i.e., the motion-corrected images. The further abort criterion may also relate to the reference image and/or motion-corrected images from previous iteration cycles. For instance, it may be checked in step 109 whether a sequence of motion-corrected images reconstructed in the course of the iteration converges. As long as the abort criterion is not fulfilled, the method continues with step 102, by which the image reconstructed in step 109 is provided as updated reference image.

The reference image provided in a previous repetition of step 102 may thus subsequently be updated with, i.e., replaced by, the motion corrected image reconstructed in step 109. Thus, step 110 closes a second iteration cycle, which includes the first iteration cycle.

The cyclic repetition of steps 102 to 110 is preferably carried out as an iteration such that successively more accurate motion estimates and, based thereon, successively more accurately motion-corrected versions of the initial reference image are obtained. In particular, step 108 may be carried out such that, in a subsequent repetition of step 107, the modelled projection data are more similar to the acquired projection data than in a previous repetition of step 107.

In the course of the above described method, particularly the repetition of steps 103 to 108, a plurality of estimates for the motion of the object may be made in respective repetitions of step 108, wherein, for each of the estimates, modelled projection data are determined using a motion model indicating a plurality of candidate motions of the object during the acquisition period. The modelled projection data for a respective candidate motion are projection data that are modelled assuming the respective candidate motion. The modelled projection data are determined by transforming the respective reference image, for a respective candidate motion, into motion-transformed versions of the image at a plurality of reference times in the acquisition period, and projecting these motion-transformed version of the reference image. The plurality of motion estimates may also be viewed as candidate motions of the object. The motion model may thus, together with a projection model for determining projection data from a given image, be understood as a motion projection model mapping candidate motions to modelled projection data, wherein the modelled projection data would, according to the motion projection model, be acquired assuming the respective candidate motion. The determination of the motion of the object, i.e., the motion eventually to be used for determining a respective motion-corrected image, may also be viewed as a selection of a particular candidate motion from all candidate motions possible or considered. The selection may be made using an iteration as outlined above, but could in principle also be made differently as long as, for instance, an acceptable value of the evaluation function is achieved.

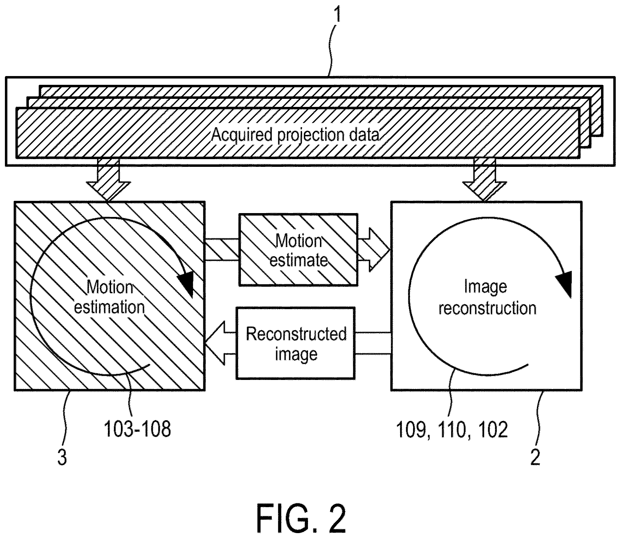

Fig. 2 shows schematically and exemplarily a system for motion-corrected imaging of an object, wherein the system is illustrated with particular emphasis on an interaction of its parts 1, 2, 3 and corresponding data flows in the system.

The system comprises a first part corresponding to a projection data providing unit 1 that is configured to provide acquired projection data. The acquired projection data, which may be raw imaging data, are tomographic projection data acquired for the object at a plurality of acquisition times during an acquisition period. That the projection data are acquired "for" the object means in this case that the projection data have been acquired with the object, i.e., the object of which a motion-corrected image is to be determined, being in an imaging region of a respective tomographic imaging modality. In other words, the acquired projection data resulted from an interaction of photons with the object and subsequently with a detector of the imaging modality. For instance, the object may have been in a beam path of a computed tomography (CT) scanner when the projection data were acquired, or between detector pairs of a positron emission tomography (PET) scanner.

Furthermore, the system comprises a third part 3 corresponding to a motion estimation unit that is configured to determine a motion estimate, the motion estimate being indicative of a motion of the object in the acquisition period, wherein the motion estimate is determined based on the acquired projection data, a reference image of the object and a motion model indicating a plurality of candidate motions of the object during the acquisition period. The motion estimate is determined by associating the reference image, for each of the plurality of candidate motions, with modelled projection data, wherein the modelled projection data for a respective candidate motion are tomographic projection data that are modelled for the acquisition period assuming the respective candidate motion. The motion projection model may be used in combination with a projection model as a motion projection model associating the reference image to the modelled projection data, wherein the modelled projection data would, according to the motion projection model, be acquired assuming the respective candidate motion. The motion model may be based on cubic B-splines as described above with respect to equation (4), or based on other functions by which the number of required parameters of the model can be reduced. The projection model may be a known projection model associating tomographic image data with corresponding modelled projection data. The motion estimate is directly determined from the acquired projection data, without an intermediate image reconstruction.

The system further comprises a second part 2 corresponding to an image reconstruction unit 2 that is configured to reconstruct a motion-corrected image of the object based on the acquired projection data and the estimated motion, which may correspond to one or more estimated motion fields. If the reference image has initially not been obtained otherwise, the image reconstruction 2 may also be configured to reconstruct an initial reference image. The reference image can initially be an image that has not yet been corrected for a motion of the object. The initial reference image will thus generally be blurred if the object moved during the acquisition period.

The system of Fig. 2 is preferentially configured to carry out the method of Fig. 1. Hence, the indicated data flows between the system parts 1, 2, 3 are preferentially generated by the system parts 1, 2, 3 taking the steps 101a-c and 102-110, as described above in more detail with respect to Fig. 1.

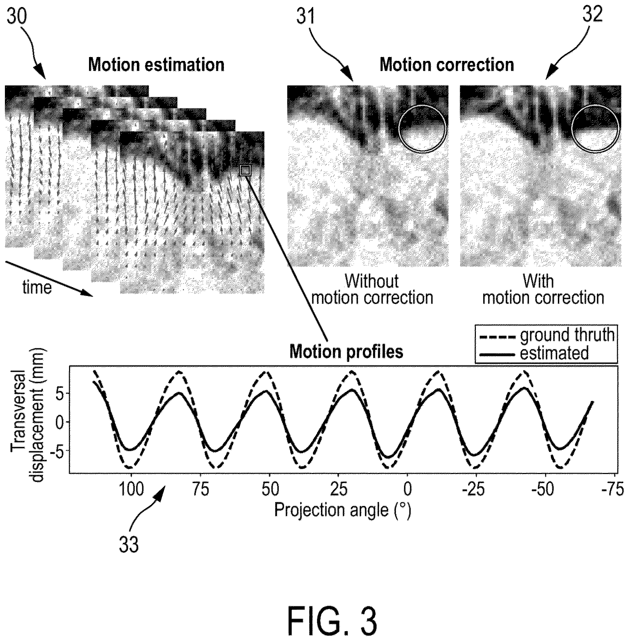

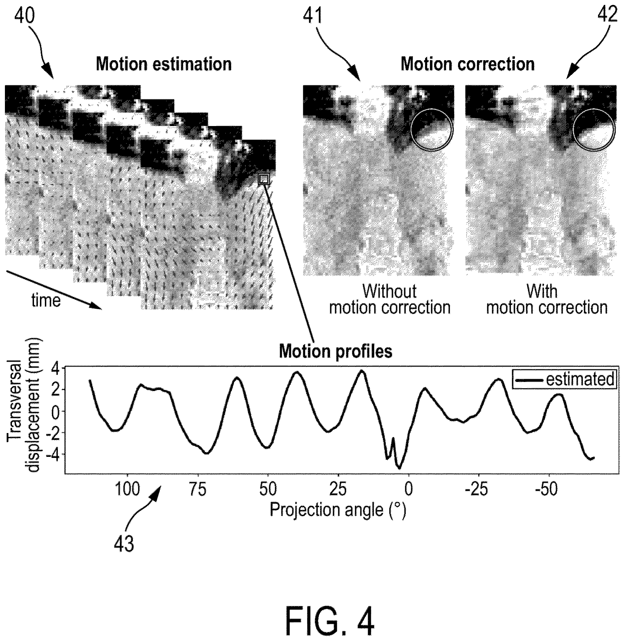

Figs. 3 and 4 exemplarily illustrate results of the above method when applied to CBCT imaging, wherein Fig. 3 relates to an in silico evaluation and Fig. 4 relates to a clinical acquisition. For the in silico evaluation, a digital anthropomorphic XCAT phantom was utilized with a breathing simulation having a physiologically realistic period of 5 s enabled. Measurements were created by forward projecting each dynamic by simulating a clinical setup, to which clinical levels of noise were added. For the clinical acquisition, raw patient data from clinical CBCT examinations acquired for position verification prior to radiotherapy were utilized. The Elekta XVI system was used for data acquisition and modelled in the ASTRA Toolbox. The acquisition time was set to 30 s with 182 ms between consecutive projections, creating 160 frames in total. A motion was estimated for each projection, such that the temporal resolution of the motion estimation was also 182 ms.

The motion estimation was optimized with a learning rate of the NAdam optimizer set to $10^{-1}$ and $\lambda$ to $10^{-10}$ in 100 and 200 iterations for the in silico and clinical experiments, respectively. 11 spatial coefficients per dimension and 128 temporal coefficients (i.e., 4.27/s) for 3 components were used for the cubic B-spline-based motion model, which were initialized randomly. The image reconstructions were performed with 200 iterations and an isotropic voxel size of 3 mm. One motion estimate alternation was applied for both experiments.

Regarding Fig. 3, a motion estimate was thus obtained from a motion-affected in silico reconstruction as reference image. The images 30 shown in Fig. 3 correspond to coronal slices of this reconstruction for several time steps, on which respective motion estimates in terms of a motion field indicated by arrows are imposed. A transversal motion profile near the diaphragm is shown in graph 33, from which it can be appreciated that the motion estimate generally follows the actual motion known from the XCAT simulation, which may be referred to as ground truth. The effect of the motion estimate on the image correction is illustrated by the circumstance that the motion-corrected image 32 appears substantially deblurred when compared to the non-corrected image 31. In particular at the diaphragm, where the transversal motion approximates the periodic ground truth as seen in the graph 33, it is visible that the motion-corrected reconstruction 32 is sharper than its initial reference 31.

In Fig. 4 it can be seen that the motion estimate determined based on the clinical acquisition captures the periodic and random respiratory motion of the patient. Again, images 40 show coronal slices at the respective time steps, with motion fields indicating respective motion estimates in terms of arrows being imposed on the images, and graph 43 shows a transversal motion profile near the lung-liver interface. The motion-corrected reconstruction 42 shows improved resolution particularly around the lung-liver interface, as compared to the motion-affected reconstruction 41, where the corresponding to contours have largely merged into one.

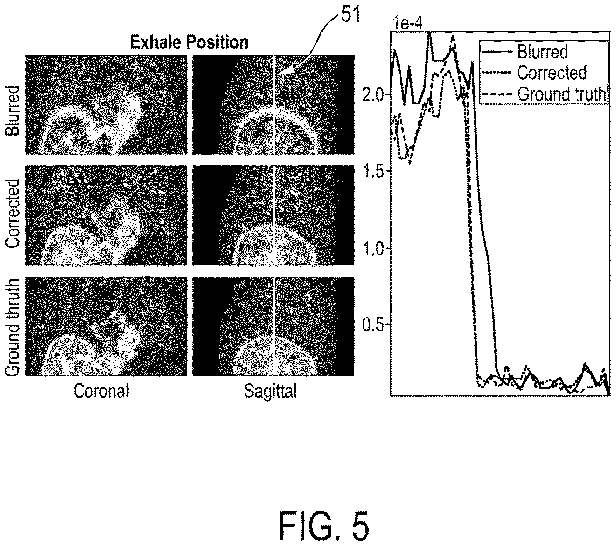

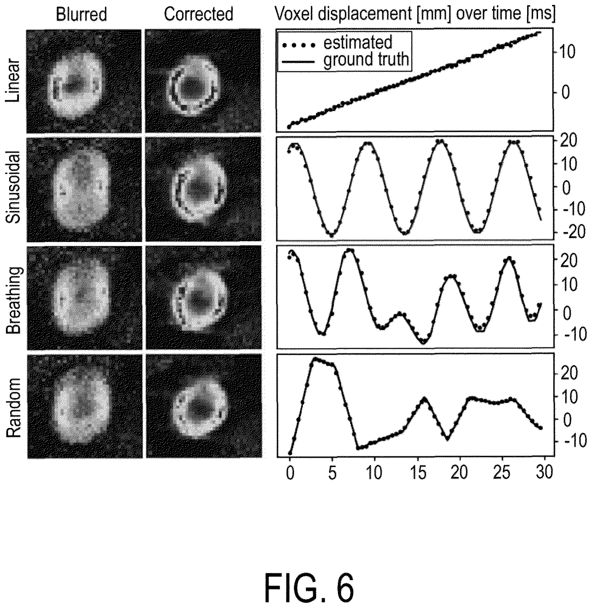

Figs. 5 and 6 show results obtained for PET imaging, wherein Fig. 5 relates to an evaluation with respect to a simulation and Fig. 6 relates to an evaluation with respect to real data.

For the simulated data, the XCAT phantom was used with only respiratory motion, to generate 10 frames of activity and attenuation for a single breathing period of 5 seconds, centered on the liver-lung interface. Projection data was calculated through CASToR, with attenuation and Poisson noise, scaled to a total count-number consistent with clinical values for 500 ms on the Biograph mCT scanner ($3 \times 10e4$ counts per frame).

For the real data, a commercially available anthropomorphic torso phantom was scanned on a moving platform at the Biograph mCT scanner. The phantom was filled with an activity of 2 MBq/ml ($6.7 \times 10^4$ counts per 500 ms frame), using ratio 1:8 for liver-myocardium and residual activity concentration in the lungs and background (ratio > 50 to myocardium). A cylinder insert of the phantom was filled with spine-like material, and the lungs with beads. The phantom was placed in the center of the system and motion was applied, following a linear, sinusoidal, breathing-like and random motion separately for 2-minute acquisitions.

The reconstructions settings were as follows: For the image update step, i.e., step 109 in Fig. 1, Ordered Subset Expectation Maximization (OSEM) was used with 3 iterations and 17 subsets, with an isotropic voxel size of 4 mm. For the motion update step, i.e., step 108 in Fig. 1, the learning rate $\gamma_t$ was set to 0.3 for the simulation (Fig. 5) and to 1.0 for the real acquisition (Fig. 6), using 15 iterations for the first frame and 10 for the rest.

Motion estimates were determined in terms of motion fields modeled by a cubic B-spline motion model, using 10 coefficients per direction for the simulated experiment (Fig. 5) and 5 coefficients per direction for the real acquisition (Fig. 6), according to the motion complexity. The motion fields were randomly initialized for the first timeframe and reused to initialize the subsequent frames.

Fig. 5 shows on the left coronal and sagittal slices of the XCAT phantom through the liver in an exhale position, which were simulated for the Biograph mCT system, and reconstructed without motion-correction (top), for one iteration of motion estimation (middle) and for a static reference (bottom), which may be referred to as the ground truth. On the right in Fig. 5, corresponding line profiles are shown, which are taken along the indicated central line 51 in the sagittal sections. That the motion estimate has been successful can be seen from the fact that the motion-corrected image is, in contrast to the non-corrected, blurred version, visually similar to the static reference or ground truth, with similar line profiles.

In Fig. 6 shows slice images and corresponding motion profiles of the anthropomorphic torso phantom through the heart insert for different motion patterns. The data was acquired using the Biograph mCT scanner with a programmable moving table. Reconstruction was carried without motion-correction (left) and for one iteration of motion estimation (middle). Motion profiles are drawn for the axial displacement, as estimated (dots) and as programmed (lines). As seen in Fig. 6, also for the clinical acquisition, the images reconstructed based on motion estimates obtained as described herein have improved image quality, with better heart contours and without motion artifacts. The motion profiles show good agreement between the estimated and applied motion, both on amplitude and time, despite the severely blurred reference. The RMSE was 0.35 mm, 1.29 mm, 1.14 mm and 0.65 mm for the linear, sinusoidal, breathing and random motions, respectively.

The present disclosure relates to motion estimation for motion-corrected emission or transmission tomographic imaging. Particular applications relate to motion-correction in PET, CT and SPECT imaging. As compared to existing motion estimation methods for correcting magnetic resonance (MR) images, motion-correction in PET imaging faces the challenge of typically low signal intensities due to low tracer doses. It may therefore be preferred to sample the full projection map for determining the respective motion estimates in each acquisition period, i.e., to carry out the comparison between modelled and acquired projection data in the full projection space. This is in contrast to the method disclosed for MR imaging in, for instance, WO 2019/002034 A1, where only a fraction of k-space is sampled to determine respective motion fields. In CT imaging, the signals can be strong, but the inherent rotation motion of source and detector can make motion-correction more demanding than in the MR case. For SPECT, both challenges, i.e. low signals and rotating motion of source and detector, are present. These challenges are addressed by the system, method and computer program disclosed herein.

The present disclosure departs from common approaches, particularly data-driven gating methods. These methods extract a motion trace from raw list mode data, providing timing information for sorting data into frames. The sorted data can then undergo reconstruction into separate frames, registration, and subsequent reconstruction with motion correction. Data-driven methods typically extract motion traces either in sinogram or projection space, often utilizing PCA-based methods, or in image space using COD-based methods. While these approaches can enhance image quality, challenges persist. Major challenges include the inability of previous methods to simultaneously address both periodic and non-periodic motion, which is overcome according the present disclosure.

The present invention could be implemented in scanner reconstruction consoles, i.e., for instance, by a corresponding upgrade or replacement of a software running on a respective console. This could lead to a better image quality, which in turn would improve diagnostic accuracy. High-frequency time-resolved imaging, as facilitated in this way, could also obviate the use of anesthesia on the pediatric population. Currently, children between 6 months and 6 years of age are scanned under anesthesia, with is costly and logistically complicated. Moreover, an accurate estimation of motion enables better planning of image-guided therapies, such as MR-guided radiotherapy.

Although above embodiments mainly related to tomographic imaging techniques like PET, CT, CBCT and SPECT, the acquired projection data could also stem from other imaging modalities. Furthermore, insofar as the above detailed description related to the use of acquired projection data from a single imaging modality, it should again be emphasized that also acquired projection data from a plurality of imaging modalities may be used, in which case one or more motion-corrected images may be reconstructed for each of the imaging modalities. Moreover, although the motion projection model has been described in more detail with reference to B-splines, also other motion models are possible, including neural network functions. In particular, the motion projection model does not need to be split into a motion model and a projection model. Similarly, the iteration leading to the motion estimates has been described with emphasis on particular loss functions, while other loss functions could be used as well. A loss function, as used in step 106, may also change across iterations. For instance, a similarity measure used in the loss function for measuring a respective similarity between the modelled projection data and the acquired projection data, as well as a regularity measure used in the loss function for measuring a regularity of the respective motion estimate, may change across iterations. This may not only, but particularly be the case if acquired projection data from a plurality of imaging modalities are provided to reconstruct motion-corrected images for each of the imaging modalities.

Other variations to the disclosed embodiments can be understood and effected by those skilled in the art in practicing the claimed invention, from a study of the drawings, the disclosure, and the appended claims.

In the claims as well as in the description, the word "comprising" does not exclude other elements or steps. The indefinite article "a" or "an" and the definite article "the" does not exclude a plurality. In particular, the indefinite article "a" or "an" may be replaced with one or more and the definite article "the" may be replaced with the one or more. A single element or other unit may fulfill the functions of several entities or items recited in the claims. The mere fact that certain measures are recited in the mutual different dependent claims does not indicate that a combination of these measures cannot be used in an advantageous implementation.

Procedures like the providing of an image, projection data or a motion projection model, the determining of a motion of an object or of a motion-corrected image of an object, et *cetera,* which can be performed by one or several elements, units or devices, can also be performed by any other number of units or devices. These procedures can be implemented as program code means of a computer program and/or as dedicated hardware. A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any disclosure and embodiments described herein relate to the methods, the systems, devices, any computer program element lined out above and vice versa. Advantageously, the benefits provided by any of the embodiments and examples equally apply to all other embodiments and examples and vice versa.

Any reference signs in the claims should not be construed as limiting the scope.

The invention relates to motion-corrected imaging of an object based on acquired projection data being tomographic projection data acquired for the object at a plurality of acquisition times during an acquisition period, and a motion estimate being indicative of a motion of the object in the acquisition period. The motion estimate is determined, based on the acquired projection data, a reference image of the object and a motion model indicating a plurality of candidate motions of the object during the acquisition period, by associating the reference image, for each of the plurality of candidate motions, with modelled projection data being modelled for the acquisition period assuming a respective candidate motion. A motion-corrected image of the object can then be reconstructed based on the acquired projection data and the motion estimate. In this way, an accurate imaging of moving objects can be achieved.

**Claims**

1. A system for motion-corrected imaging of an object, wherein the system comprises:

- a projection data providing unit (1) configured to provide acquired projection data, the acquired projection data being tomographic projection data acquired for the object at a plurality of acquisition times during an acquisition period,

- a motion estimation unit (3) configured to determine a motion estimate, the motion estimate being indicative of a motion of the object in the acquisition period, wherein the motion estimate is determined, based on the acquired projection data, a reference image of the object and a motion model indicating a plurality of candidate motions of the object during the acquisition period, by associating the reference image, for each of the plurality of candidate motions, with modelled projection data, wherein the modelled projection data for a respective candidate motion are tomographic projection data that are modelled for the acquisition period assuming the respective candidate motion, and

an image reconstruction unit (2) configured to reconstruct a motion-corrected image of the object based on the acquired projection data and the motion estimate.

2. The system as defined in claim 1, wherein the image reconstruction unit is configured to reconstruct the reference image based on the acquired projection data.

3. The system as defined in claim 1 or 2, wherein the image reconstruction unit (2) and the motion estimation unit (3) are configured to carry out an iteration including several iterations cycles in each of which the reference image is updated based on a respective previously reconstructed motion-corrected image.

4. The system as defined in any of the preceding claims, wherein the motion estimation unit (3) is configured to determine the motion estimate by comparing the acquired projection data to modelled projection data for at least a part of the plurality of candidate motions of the object.

5. The system as defined in claim 4, wherein the motion estimation unit (2) is configured to determine the motion estimate based further on a degree of regularity of the candidate motions of the object.

6. The system as defined in any of the preceding claims, wherein the motion model associates the reference image, for each of the plurality of candidate motions, with a motion-transformed version of the reference image for each of a plurality of reference times, thereby indicating a time sequence of motion-transformed versions of the reference image for each of the plurality of candidate motions.

7. The system as defined in claim 6, wherein the modelled projection data for a respective candidate motion refer to a time sequence of modelled projections of the motion-transformed versions of the reference image for the respective candidate motion.

8. The system as defined in any of the preceding claims, wherein the motion estimation unit (2) is configured to determine the motion estimate by parametrizing the candidate motions by a set c of motion parameters and determining for which c a function of the form

$$L = \varepsilon \mathcal{L}(\mathbf{F}(\mathbf{c}), \mathbf{s}) + \lambda \mathcal{R}$$

is minimized, wherein L measures a similarity between modelled projection data indicated by F(c) and acquired projection data indicated by $\boldsymbol{s}$, $\varepsilon$ is a predefined coefficient, $\mathcal{R}$ is a regularizing function for regulating the candidate motions of the object being considered for minimizing $L$, and $\lambda$ is a regularization coefficient.

9. The system as defined in any of the preceding claims, wherein the acquired projection data are computed tomography projection data and the motion estimation unit is configured to determine the motion estimate by parametrizing the candidate motions by a set c of motion parameters and determining for which c a function of the form

$$L_{\mathrm{CT}} = \frac{1}{T} \sum_{t=1}^{T} \|\mathbf{F}_t(\mathbf{c} \mid \mathbf{q}_0) - \boldsymbol{s}_t\|_2^2 + \lambda \mathcal{R}(\mathbf{T}_t(\mathbf{c}))$$

is minimized, wherein $\mathbf{q}_0$ indicates the reference image, $\boldsymbol{s}_t$ indicates the acquired projection data at time $t$, with $t = 1, \dots,$

$T$, $\mathbf{F}_t(\mathbf{c}\,|\,\mathbf{q}_0)$ indicates the modelled projection data in terms of the motion model, $\mathbf{T}_t(\mathbf{c})$ indicates the candidate motion of the object at time t, $\mathcal{R}\,(\mathbf{T}_t(\mathbf{c}))$ is a regularizing function for regulating the candidate motions of the object being considered for minimizing $L_{CT}$, and $\lambda$ is a regularization coefficient.

10. The system as defined in any of claims 1 to 8, wherein the acquired projection data are positron emission tomography projection data and the motion estimation unit is configured to determine the motion of the object by parametrizing the candidate motions by a set **c** of motion parameters and determining for which **c** a function of the form

$$L_{\mathrm{PET}} = \sum_{t=1}^{T} \sum_{b=1}^{B} \mathbf{F}_{b,t}(\mathbf{c}\,|\,\mathbf{q_0},\boldsymbol{\mu}) - \log\!\big(\mathbf{F}_{b,t}(\mathbf{c}\,|\,\mathbf{q_0},\boldsymbol{\mu})\big)\,s_{b,t} \; + \; \lambda\mathcal{R}(\mathbf{T}_t(\mathbf{c}))$$

is minimized, wherein $\mathbf{q}_0$ indicates the reference image, $\boldsymbol{\mu}$ indicates an attenuation map, $s_{b,t}$ indicates the projection data acquired for a line of response indicated by $b$ at time $t$, with $b = 1, ...,B$ and $t = 1, ..., T$, $\mathbf{F}_{b,t}(\mathbf{c}\,|\,\mathbf{q}_0, \boldsymbol{\mu})$ indicates the modelled projection data in terms of the motion model, $\mathbf{T}_t(\mathbf{c})$ indicates the candidate motion of the object at time $t$, $\mathcal{R}$ $(\mathbf{T}_t(\mathbf{c}))$ is a regularizing function for regulating the candidate motions of the object being considered for minimizing $L_{PET}$, and $\lambda$ is a regularization coefficient.

11. The system as defined in claim 9 or 10, wherein the regularizing function is selected such that smooth motion estimates are promoted.

12. The system as defined in any of the preceding claims, wherein the motion model is based on a set of functions, wherein the functions are, for example, a set of basis function such as cubic B-splines, wavelets, neural networks or Fourier series.

13. The system as defined in any of the preceding claims, wherein the projection data providing unit (1) is configured to provide acquired projection data for a plurality of acquisition periods, wherein a motion-corrected reference image is reconstructed by the image reconstruction unit (2) based on one or more motion estimates determined by the motion estimation unit (3) for each acquisition period and motion-transformed to the corresponding period.

14. A method for motion-corrected imaging of an object, the method including:

    - providing (101) acquired projection data, the acquired projection data being tomographic projection data acquired for the object at a plurality of acquisition times during an acquisition period,
    - determining (103-107) a motion estimate, the motion estimate being indicative of a motion of the object in the acquisition period, wherein the motion estimate is determined, based on the acquired projection data, a reference image of the object and a motion model indicating a plurality of candidate motions of the object during the acquisition period, by associating the reference image, for each of the plurality of candidate motions, with modelled projection data, wherein the modelled projection data for a respective candidate motion are tomographic projection data that are modelled for the acquisition period assuming the respective candidate motion, and
    - reconstructing (109) a motion-corrected image of the object based on the acquired projection data and the motion estimate.

15. A computer program for motion-corrected imaging of an object, comprising instructions causing a computer to carry out the method of claim 14 when the program is carried out on the computer.

FIG. 1

FIG. 2

FIG. 3

FIG. 4

FIG. 5

EP 4 687 103 A1

FIG. 6

22

## EUROPEAN SEARCH REPORT

Application Number

EP 24 19 2192

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUTTINGA NIEK RICARDO FERDINAND: "Towards real-time motion estimation for MR-guided radiotherapy: From MR-images to MR-MOTUS", PH.D. THESIS, UTRECHT UNIVERSITY, THE NETHERLANDS, 31 May 2023 (2023-05-31), XP093239220, Utrecht, The Netherlands DOI: 10.33540/1706 | 1-9, 11-15 | INV. G06T11/00 |
| A | * sec. 4, "Real-time non-rigid 3D respiratory motion estimation using MR-MOTUS" * | 10 | |
| | ----- | | |
| T | Cho Z. H.: "Tomography" In: "Encyclopedia of Physical Science and Technology (Third Edition)", 2003, XP093239386, pages 843-877, Retrieved from the Internet: URL:https://doi.org/10.1016/B0-12-227410-5/00965-0> * the whole document * | | |
| | ----- | | |

**TECHNICAL FIELDS SEARCHED (IPC)**

G06T

The present search report has been drawn up for all claims

| Place of search | Date of completion of the search | Examiner |
|---|---|---|
| Munich | 16 January 2025 | Werling, Alexander |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019002034 A1

**Non-patent literature cited in the description**

- **D. RUECKERT et al.** Nonrigid Registration Using Free-Form Deformations: Application to Breast MR Images. *IEEE Transactions on Medical Imaging*, 1999, vol. 18
- **G. SCHRAMM et al.** *Frontiers in Nuclear Medicine*, 2023, vol. 3
- **T. DOZAT**. Incorporating Nesterov momentum into Adam. *Proc. ICLR*, 2016, 1-4
- **W. VAN AARLE et al.** The ASTRA Toolbox: A platform for advanced algorithm development in electron tomography. *Ultramicroscopy*, 2015, vol. 157, 35-47
- **T. MERLIN et al.** CASToR: a generic data organization and processing code framework for multi-modal and multi-dimensional tomographic reconstruction. *Phys Med Biol.*, 2018, vol. 63 (18)
- **J. DEY et al.** Theoretical and Numerical Study of MLEM and OSEM Reconstruction Algorithms for Motion Correction in Emission Tomography. *IEEE Trans Nucl Sci.*, 2009, vol. 56 (5), 2739-2749
- **G. VAN EYNDHOVEN et al.** Combined Motion Estimation and Reconstruction in Tomography. *Computer Vision - ECCV 2012; Workshops and Demonstrations, Lecture Notes in Computer Science*, vol. 7583, 12-21